Europäisches Patentamt

European Patent Office

Office européen des brevets

(19)

(11) Veröffentlichungsnummer: **0 166 820**

**A1**

(12) **EUROPÄISCHE PATENTANMELDUNG**

(21) Anmeldenummer: **84115812.4**

(22) Anmeldetag: **19.12.84**

(51) Int. Cl.⁴: **B 29 C 67/22**
**C 08 G 63/62, C 08 L 69/00**

(30) Priorität: **18.05.84 DE 3418506**

(43) Veröffentlichungstag der Anmeldung:
**08.01.86 Patentblatt 86/2**

(84) Benannte Vertragsstaaten:
**AT BE CH DE FR GB IT LI LU NL SE**

(71) Anmelder: **Firma Carl Freudenberg**
**Höhnerweg 2**
**D-6940 Weinheim/Bergstrasse(DE)**

(72) Erfinder: **Lohmar, Ernst, Dr.**
**Weimarerstrasse 23**
**D-6940 Weinheim(DE)**

(72) Erfinder: **Henke, Jürgen**
**Wernherstrasse 18**
**D-6806 Viernheim(DE)**

(72) Erfinder: **Nahe, Torsten**
**Schulstrasse 38**
**D-6800 Mannheim 24(DE)**

(74) Vertreter: **Weissenfeld-Richters, Helga, Dr.**
**Höhnerweg 2**
**D-6940 Weinheim/Bergstrasse(DE)**

(54) Verfahren zur Herstellung von Schaumstoffen mit hoher Wärmeformbeständigkeit.

(57) Verfahren zur Herstellung eines sehr leichtgewichtigen, in weiten Temperaturbereichen schlagzähen, elastischen, formbeständigen Schaumstoffes, wobei ein Polycarbonat-schaumstoff erzeugt wird, dessen Schmelze im Extruder durch Direktbegasung mit einem Treibmittel gemischt und nach der Extrusion ohne irgendwelche Abkühlungsmaßnahmen langsam erstarren gelassen wird.

EP 0 166 820 A1

Croydon Printing Company Ltd

· Dr. H. Weissenfeld-Richters
Patentanwältin

Höhnerweg 2-4
6940 Weinheim/Bergstr.
Telefon 0 6 2 0 6 6 8 2 0
Telex 4 65 531

18. Dezember 1984
Ho/Sch
ON 5018/Europa

- 1 -

Anmelderin: Firma Carl Freudenberg, Weinheim

Verfahren zur Herstellung von Schaumstoffen mit hoher
Wärmeformbeständigkeit

Die Erfindung betrifft ein Verfahren zur Herstellung von
Schaumstoffen mit hoher Wärmeformbeständigkeit, bei
welchem ein Thermoplast durch Direktbegasung der Schmelze
mit flüssigen oder gasförmigen Treibmitteln in einem Extruder schäumfähig gemacht und anschließend als Schaumstoff extrudiert wird.

Ein derartiges Verfahren ist beschrieben in DE-AS 18 08 171.
Dabei wird einem beliebigen, unter Normalbedingungen festen
thermoplastischen Polymeren im erweichten Zustand eine flüchtige organische Verbindung zugeführt, das Ganze unter erhöhtem Druck in einer Misch- und Kühlzone gemischt und in eine kühle Zone von Normaldruck extrudiert, wobei das thermoplastische Polymere in Form einer von flüchtigen Bestandteilen befreiten Schmelze dem Extruder zugeführt wird.

DE-AS 25 01 966 lehrt die Technik, den Gasdruck des Treibmittels laufend an die Druckschwankungen der Schmelze in der Laufbüchse anzupassen. Es wird vorgeschlagen, Gase zu verwenden, die bei den hohen Extrusionsdrucken nicht verflüssigt werden, also sich unter den gegebenen thermodynamischen Bedingungen oberhalb ihrer kritischen Temperatur befinden, z.B. $N_2$, Ne, Ar, He.

In DE-OS 29 06 973 und EP-OS 68 332 wird als flüssiges Treibmittel für thermoplastische Schaumstoffe aus z.B. Polystyrol oder Polyolefin ein halogenierter Kohlenwasserstoff oder Pentan vorgeschlagen. Auf seinem Weg zur Spritzdüse wird das geschmolzene Material einem so hohen Druck ausgesetzt, daß das Treibmittel vorerst nicht verflüchtigt wird. Hier ist also im Gegensatz zur vorherbeschriebenen Anmeldung ein flüssiger Aggregatzustand des Treibmittels erwünscht; seine kritische Temperatur muß also möglichst hoch liegen.

Aliphatische Kohlenwasserstoffe, insbesondere solche, die erst unter Druck im Polymeren löslich sind, werden in DE-OS 32 20 856 als Treibmittel für Styrolpolymerisate beschrieben. Dabei werden bis zu 80% Polyphenylenoxid zugemischt. Nach dem Entspannen der Mischung auf Atmosphärendruck muß der Schaumstoff von außen intensiv gekühlt werden. Das Produkt weist eine Wärmeformbeständigkeit bis zu 144°C bei einem Raumgewicht von 55 g/m³ auf.

- 3 -

0166820

Die nach den erwähnten Verfahren hergestellten Schaumstoffe haben entweder eine nur geringe Wärmeformbeständigkeit bzw. mechanische Festigkeit oder eine unzureichende Schlagzähigkeit; sie sind entweder weich-elastisch oder spröde. In einem weiten Temperaturbereich schlagzähe, elastische und gleichzeitig formbeständige, leichtgewichtige Schaumstoffe mit Raumgewichten unter 200 kg/m$^3$ ließen sich bisher nicht herstellen.

Der vorliegenden Erfindung liegt daher die Aufgabe zugrunde, eine Synthese der letztgenannten Eigenschaften in einem neuartigen Schaumstoff zu verwirklichen: Schlagzähigkeit, Elastizität und Formbeständigkeit in einem weiten Temperaturbereich bei niedrigstem Flächengewicht. Dabei sollen die bekannten Direktbegasungsverfahren der thermoplastischen Schmelze beim Extrudieren angewendet werden können.

Die Lösung dieser Aufgabe besteht erfindungsgemäß darin, daß als thermoplastisches Polymeres ein Polycarbonat mit einem Schmelzindex (MFI oder MFR) von 2 g/10 min bis 20 g/10 min (300°C/1,2 kg nach DIN 53735 oder ISO IR 1133) verwendet wird, daß die Schmelze bis zum Verlassen der Düse auf Temperaturen über 150°C gehalten und nach dem Verlassen der Düse ohne zusätzliche kühlende Maßnahmen erstarren gelassen wird. Das Polycarbonat wird im Extruder unter einem Druck von 2 bis 40 MPa gehalten.

Es werden Polycarbonate bevorzugt, deren MFI zwischen 5 g/10 min und 10 g/10 min liegen. Geringere Viskositäten haben eine zu geringe Zähigkeit der Schmelze beim Aufschäumvorgang zur Folge; das Raumgewicht der resultierenden Schaumstoffe liegt zu hoch. Werden Polycarbonate mit MFI unter 2 g/10 min eingesetzt, so schäumen sie nicht vollständig auf, und die Gasausbeute des Treibmittels ist gering.

Als Treibmittel eignen sich die bekannten leichtflüchtigen organischen Verbindungen, insbesondere halogenierte Kohlenwasserstoffe wie Difluordichlormethan, Monofluortrichlormethan, Tetrafluordichloräthan, Trifluorchlormethan, Trifluortrichloräthan oder Methylenchlorid.

Ferner erwiesen sich auch unter Extrusionsbedingungen flüssige Treibmittel als geeignet. Diese lösen sich als Flüssigkeit im Polymeren, wie es beispielsweise in der erwähnten EP-OS 68 332 beschrieben ist.

Eine Extrusionsverschäumung des Polycarbonats ist auch mit unter Extrusionsbedingungen im überkritischen Zustand befindlichen Gasen möglich, so etwa mit den bereits in DE-AS 25 01 966 erwähnten Gasen $N_2$, Ne, Ar, He, aber auch mit $CO_2$ oder $N_2O$. All diesen Gasen ist gemeinsam, daß ihr kritischer Punkt im Zustandsdiagramm bei einer so niedrigen Temperatur liegt, daß bei genügender Erwärmung keine auch noch so hohe Druckaufgabe zur Verflüssigung führt.

Während bei der Herstellung von Schaumstoffen aus Styrol- oder Olefinpolymeren eine schnelle und intensive Kühlung der aus dem Extruder austretenden, bei Atmosphärendruck schäumenden Schmelze erforderlich ist, wurde bei der Herstellung der Schaumstoffe aus Polycarbonat gefunden, daß diese Kühlung nicht hilfreich ist; sie führt im Gegenteil zu einem allzu schnellen Erstarren, so daß beträchtliche Treibmittelanteile für die Schaumstoffbildung ungenutzt in der thermoplastischen Schmelze gelöst verbleiben.

Entscheidend und überraschend für die Lösung der erfindungsgemäßen Aufgabe war also die für die Schaumextrusion ansonsten nicht übliche Vorgehensweise, die schäumende Schmelze ohne zusätzliche Hilfsmittel, wie Gebläse oder gekühlte Kontaktflächen, möglichst langsam erstarren zu lassen. Die Schmelze wurde bis zum Abschluß des Schäumvorganges auf Temperaturen über 150°C bis maximal 260°C gehalten, um so möglichst viel Treibmittel für die Schaumstoffbildung auszunutzen. Im Gegenteil können die Produkteigenschaften durch ein Nachheizen des extrudierten Schaumstoffes auf 100 bis 180°C für ca. 1 Minute noch verbessert werden. Wird versucht, unter den für die Extrusionsschäumung sonst üblichen Bedingungen zu schäumen, erhält man keine effektive Schaumstoffbildung. Erst die unüblichen Schäumbedingungen ermöglichen eine nicht vorhersehbare, wirtschafliche Schaumstoffherstellung aus Polycarbonaten.

Als weitere Einflußgröße auf den Schäumvorgang, mit der Möglichkeit, gezielt den Nachschäumeffekt zu steuern, erweist sich die gezielte Zugabe an Nukleierungsmittel (z.B. Talkum, Kreide, Gesteinsmehl, Glaskugeln oder Metallpulver).

Es lassen sich auf die beschriebene Art Schaumstoffe aus Polycarbonat herstellen, die Raumgewichte zwischen 200 kg/cm$^3$ und 20 kg/m$^3$ besitzen. Solche Schaumstoffe sind neu und von erheblichem technischem und wirtschaftlichem Interesse, da sie aufgrund ihrer vorteilhaften mechanischen Kenngrößen als Werkstoffe für die Leichtbauweise in Frage kommen. Sie sind als Platten und Folienware ausgezeichnet tiefziehfähig. Farbpigmente, Füllstoffe, Verstärkungsstoffe, flammhemmende Zusätze und Alterungsschutzmittel können in gewohnter Weise zugesetzt werden, so daß beispielsweise mechanisch und thermisch hochbeständige Profile hergestellt werden können.

Im folgenden wird die Erfindung an einigen Beispielen erläutert:

## Beispiel 1

Polycarbonat (MFI = 2 g/10 min) wird in einem Einwellenextruder, der einen Schneckendurchmesser von 90 mm und eine Länge von 42 D (= 3780 mm) hat, aufgeschmolzen (Temperatur der Masse: 240 bis 270°C). Die Schneckendrehzahl beträgt 36 U/min. Der Ausstoß ist 100 kg Polymer/Stunde. Bei 15 D wird unter Druck das Treibmittel Trifluortrichloräthan in einer Menge von 6 l/Stunde bei 20 MPa in die Schmelze eingespritzt und mit dem Polymer gemischt. Die treibmittelbeladene Schmelze wird dann im Extruder auf 180 bis 260°C heruntergekühlt und über eine Ringdüse (Ringspalt 1 mm) ausgepreßt. Dann wird über einen auf 140°C geheizten Ring abgezogen, und zwar ohne zusätzliche Kühlung.

Der erhaltene Schaumstoff hat ein Raumgewicht von 130 kg/m³ und eine Dicke von 4 mm. Die Biegefestigkeit nach Frank in Anlehnung an ASTM D 747-70 betrug bei einem Winkel von 5³: 1250 kg/cm².

Eine im Vakuum verformte Schaumstoffbahn behielt bei zweistündiger Lagerung in einem Umluftschrank bei 140°C ihre Form bei; der Schrumpf war unter 1 %.

## Beispiel 2

Es wird wie in Beispiel 1 verfahren, jedoch unter Verwendung des Treibmittel Monofluortrichlormethan mit einem Anteil von 12,6 Gew.% der Schmelze. Der erhaltene Schaumstoff hat ein Raumgewicht von 63 kg/m³.

Beispiel 3

Polycarbonat (MFI = 2 g/10 min) wird in einem Doppelwellenextruder, der einen Schneckendurchmesser von 34 mm und eine
Länge von ca. 28 D (960 mm) hat, aufgeschmolzen (Temperatur
der Masse 240 bis 270°C). Die Schneckdrehzahl beträgt 100 U/
min, der Ausstoß 10 kg/Stunde (auf das Polymer bezogen).
Nach 12 D wird das Treibmittel Monofluortrichlormethan in
einer Menge von 0,7 1/Stunde unter einem Druck von 10 MPa
in die Schmelze eingespritzt und mit dem Polymer gemischt.
Die treibmittelbeladene Schmelze wird dann im Extruder heruntergekühlt auf 210 bis 240°C und über eine Lochdüse mit
dem Durchmesser von 3 mm ausgepreßt. Dieser Rundstrang ist
zunächst kompakt, schäumt aber nach einigen Zentimetern Abstand von der Düse langsam auf. Die in der Schmelze enthaltene Wärme wird nicht durch irgendwelche Hilfsmittel,
wie z.B. Gebläse, abgeführt. Der erhaltene Schaumstoff hat
ein Raumgewicht von 60 kg/m$^3$ und eine feine, gleichmäßige
Zellstruktur.

Beispiel 4

Ein geschäumter Rundstrang wird gemäß Beispiel 3 hergestellt,
jedoch nach der Extrusion in einem IR-Strahlerfeld ca. 1
Minute mit 110 bis 130°C kontinuierlich nachgeheizt. Der
erhaltene Schaumstoffstrang hat ein Raumgewicht von 55 kg/m$^3$.

Ansprüche:

1. Verfahren zur Herstellung von Schaumstoffen mit verbesserter Wärmeformbeständigkeit, wobei ein thermoplastisches Polymeres in einem Extruder mit einem flüchtigen Treibmittel gleichmäßig vermengt und die mit Gas angereicherte, unter erhöhtem Druck stehende Schmelze in eine Zone mit Atmosphärendruck ausgepreßt wird, dadurch gekennzeichnet, daß als thermoplastisches Polymeres ein Polycarbonat mit einem Schmelzindex von 2 bis 20 g/10 min (300°C/1,2 kg) verwendet wird, daß die Schmelze bis zum Verlassen der Düse auf Temperaturen über 150°C gehalten und nach dem Verlassen der Düse ohne zusätzliche kühlende Maßnahme erstarren gelassen wird.

2. Verfahren nach Anspruch 1, dadurch gekennzeichnet, daß der Schmelzindex des Polycarbonats 5 bis 10 g/10 min beträgt.

3. Verfahren nach Anspruch 1 oder 2, dadurch gekennzeichnet, daß das Treibmittel eine leicht flüchtige organische Verbindung ist.

4. Verfahren nach Anspruch 3, dadurch gekennzeichnet, daß das Treibmittel ein halogenierter Kohlenwasserstoff ist.

5. Verfahren nach Anspruch 1 oder 2, dadurch gekennzeichnet, daß das Treibmittel ein Gas ist, welches unter den Extrusionsbedingungen als Flüssigkeit im Polymeren vorliegt.

6. Verfahren nach Anspruch 1 oder 2, dadurch gekennzeichnet, daß das Treibmittel ein Gas ist, welches sich unter den Extrusionsbedingungen im thermodynamisch überkritischen, gasförmigen Zustand befindet.

7. Verfahren nach Anspruch 6, dadurch gekennzeichnet, daß das Treibmittel $N_2$, Ne, Ar, He, $CO_2$ oder $N_2O$ ist.

8. Verfahren nach einem oder mehreren der vorhergehenden Ansprüche, dadurch gekennzeichnet, daß die Schmelze unter einem Druck von 2 bis 40 MPa und einer Temperatur zwischen 150 und 270°C gehalten wird.

9. Verfahren nach einem oder mehreren der vorhergehenden Ansprüche, dadurch gekennzeichnet, daß die Schmelze direkt nach der Extrusion 1 Minute lang mit 100 bis 180°C nachgeheizt wird.

Europäisches
Patentamt

**EUROPÄISCHER RECHERCHENBERICHT**

0166820
Nummer der Anmeldung

EP 84 11 5812

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 434 085 (GENERAL ELECTRIC CO.) * Seite 2, Zeilen 17-21; Seite 3, Zeilen 10-11; Seite 17, Zeile 24 - Seite 18, Zeile 16; Beispiel 1; Ansprüche 1,3,5 * | 1,3,7, 8 | B 29 C 67/22 C 08 G 63/62 C 08 L 69/00 |
| A | DE-A-2 400 086 (GENERAL ELECTRIC CO.) * Seite 1, Zeile 7 - Seite 2, Zeile 2; Seite 2, Zeilen 14-19; Seite 4, Zeilen 24-31 * | | |
| A | KUNSTSTOFFE-PLASTICS, Heft 7, 1973, München; "Schaumstoff aus Polycarbonat", Seite 6 * Spalte 3, Zeilen 13-21 * | 1 | |
| A | KUNSTSTOFF-RUNDSCHAU, Band 20, Heft 10, Oktober 1973, Leverkusen; Dr. WOLFGANG COHNEN et al. "Polycarbonat-Strukturschaum - Herstellung, Eigenschaften, Anwendung", Seiten 425-434 * Seite 426, Spalten 1,2 * | | RECHERCHIERTE SACHGEBIETE (Int. Cl.4) B 29 C 67/22 C 08 G 63/62 C 08 L 69/00 |
| D,A | DE-A-1 808 171 (DOW CHEMICAL CO.) | | |
| D,A | DE-B-2 501 966 (THE FURUKAWA ELECTRIC CO. LTD.) --- -/- | | |

Der vorliegende Recherchenbericht wurde für alle Patentansprüche erstellt

| Recherchenort BERLIN | Abschlußdatum der Recherche 08-08-1985 | Prüfer BRUCK F. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

**Europäisches Patentamt**

**EUROPÄISCHER RECHERCHENBERICHT**

**0166820**
Nummer der Anmeldung

EP 84 11 5812

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-2 906 973 (LAVORAZIONE MATERIE PLASTICHE) | | |
| | --- | | |
| D,A | DE-A-3 220 856 (BASF AG) | | |
| | --- | | |
| D,A | EP-A-0 068 332 (THE B.F. GOODRICH CO.) | | |
| | ----- | | |

| | | | **RECHERCHIERTE SACHGEBIETE (Int. Cl.4)** |
|---|---|---|---|

Der vorliegende Recherchenbericht wurde für alle Patentansprüche erstellt.

| Recherchenort BERLIN | Abschlußdatum der Recherche 08-08-1985 | Prüfer BRuCK F. |
|---|---|---|